# EUROPÄISCHE PATENTSCHRIFT

(11) **EP 0 400 224 B1**
(45) Veröffentlichungstag und Bekanntmachung des Hinweises auf die Patenterteilung: **15.09.1993**
(21) Anmeldenummer: 89250105.7
(22) Anmeldetag: 04.12.1989
(51) Int. Cl.: A61C 8/00

(54) **Enossales Einzelzahnimplantat sowie Konterwerkzeug zur Verwendung bei einem derartigen Implantat**
Endosseous implant and tool
Implant endo-osseux et outil

(30) Priorität: 31.05.1989 DE 3917690
(43) Veröffentlichungstag der Anmeldung: 05.12.1990
(73) Patentinhaber: IMZ-Fertigungs- und Vertriebsgesellschaft für dentale Technologie mbH, 70794 Filderstadt (DE); EBERLE MEDIZINTECHNISCHE ELEMENTE GMBH, D-75449 Wurmberg (DE)
(72) Erfinder: Dürr, Walter, D-7537 Remchingen (DE); Kirsch, Axel, Dr., D-7024 Filderstadt (DE)
(74) Vertreter: Goddar, Heinz J., Dr.

(56) Entgegenhaltungen:
- EP-A- 0 000 549
- EP-A- 0 216 031

## Beschreibung

Die Erfindung betrifft ein enossales Einzelzahnimplantat mit einen Befestigungskopf und einen mit einem Grundkörper verschraubbaren Implantatpfosten aus Metall aufweisenden Befestigungseinrichtungen für einen festsitzenden, bedingt abnehmbaren Zahnersatz, mit einer mit einem Zentrierbund versehenen, in das offene Ende des Grundkörpers einschraubbaren und mit einer Schulter an den oberen Rand des Grundkörpers anlegbaren Distanzhülse aus Metall, in die der Implantatpfosten einschraubbar ist, sowie ein Konterwerkzeug zur Verwendung bei einem derartigen Einzelzahnimplantat.

Enossale Implante der vorstehend beschriebenen Art, wie sie beispielsweise in der EP-OS 0 216 031 beschrieben sind, haben sich in der Praxis durchaus bewährt. Bei Verwendung als Einzelzahnimplantate besteht jedoch eine Schwierigkeit insoweit, als keine verlässliche Sicherung des Zahnersatzes gegen ein Verdrehen relativ zum Grundkörper vorgesehen ist, es sei denn, die Einzelteile des Implantates sowie der Zahnersatz werden miteinander verklebt, wobei sich aber Schwierigkeiten bei z.B. einem späteren Austausch des Zahnersatzes oder des Implantatpfostens, ggf. nach einem bruchbedingten Versagen desselben, ergeben.

Der Erfindung liegt die Aufgabe zugrunde, ein enossales Einzelimplantat der gattungsgemäßen Art zu schaffen, welches eine zuverlässige, einfache, nichtsdestoweniger bedarfsweise lösbare Sicherung des Zahnersatzes gegen ein Verdrehen relativ zum Grundkörper gewährleistet.

Erfindungsgemäß wird diese Aufgabe dadurch gelöst, daß die Distanzhülse ein mit einem Außen-Einsetzgewinde in den Grundkörper einschraubbares Distanzhülsen-Unterteil und ein mit der Schulter zum Anlegen an den oberen Rand des Grundkörpers versehenes ringmutterartiges Distanzhülsen-Oberteil aufweist, welche mittels eines Innen-Kontergewindes mit wesentlich geringerer Steigung als das Einsetzgewinde auf ein nahe dem oberen Rand des Distanzhülsen-Unterteils an diesem vorgesehenes entsprechendes Außengewinde aufschraubbar ist; und daß an der oberen Stirnfläche des Distanzhülsen-Unterteils und des Distanzhülsen-Oberteils Werkzeug-Ansetzeinrichtungen zum gleichzeitigen Sichern des Distanzhülsen-Unterteils gegen Verdrehen nach dem Einschrauben in den Grundkörper und Verdrehen des Distanzhülsen-Oberteils relativ zum Distanzhülsen-Unterteil unter Anpressen der Schulter an den oberen Rand des Grundkörpers vorgesehen sind.

Dabei kann vorgesehen sein, daß die an der Stirnfläche des Distanzhülsen-Unterteils vorgesehene Werkzeug-Ansetzeinrichtung einen diametral verlaufenden Ansetzsteg aufweist.

Eine weitere Ausführungsform der Erfindung sieht vor, daß die an der Stirnfläche des Distanzhülsen-Oberteils vorgesehene Werkzeug-Ansetzeinrichtung mindestens zwei diametral einander gegenüberliegende Ansetznuten aufweist.

In weiterer Ausführung der Erfindung kann vorgesehen sein, daß die zur Aufnahme des Implantatpfostens bestimmte Innenbohrung des Distanzhülsen-Unterteils nahe dessen oberen Rand ein Zentriergewinde zum Ansetzen eines Konterwerkzeuges aufweist.

Erfindungsgemäß wird auch ein Konterwerkzeug zur Verwendung bei einem Einzelzahnimplantat der erfindungsgemäßen Art vorgeschlagen, welches gekennzeichnet ist durch einen zu der an der Stirnfläche des Distanzhülsen-Unterteils vorgesehenen Werkzeug-Ansetzeinrichtung komplementären Unterteilschlüssel und einen zu der an der Stirnfläche des Distanzhülsen-Oberteils vorgesehenen Werkzeug-Ansetzeinrichtung komplementären, relativ gegenüber dem Untereilschlüssel verdrehbaren Oberteilschlüssel.

Nach der Erfindung kann dabei eine den Unterteilschlüssel, und den Oberteilschlüssel konzentrisch durchsetzende Zentrierschraube zum Einsetzen in das Zentriergewinde des Distanzhülsen-Unterteiles vorgesehen sein.

Weiterhin schlägt die Erfindung bei einem Konterwerkzeug der beanspruchten Art ggf. vor, daß die Zentrierschraube mittels eines Rändelkopfes betätigbar ist.

Schließlich kann bei dem Konterwerkzeug nach der Erfindung auch vorgesehen sein, daß der Unterteilschlüssel und der Oberteilschlüssel mit im wesentlichen senkrecht zur Achse ihrer relativen Verdrehung verlaufenden Befestigungshebeln versehen sind.

Der Erfindung liegt die überraschende Erkenntnis zugrunde, daß es gelingt, eine zuverlässige Drehsicherung bzw. Drehblockierung bei einem Einzelzahnimplantat dadurch zu erzielen, daß die Distanzhülse, das sogenannte "Insert", welches vorzugsweise aus Titan besteht, in der beanspruchten Weise zweiteilig ausgebildet wird. Das mit der Schulter an der oberen Ringschulter des Grundkörpers anliegende ringmutterartige Distanzhülsen-Oberteil ist dabei gegenüber dem Distanzhülsen-Unterteil mittels des Kontergewindes mit sehr flacher Steigung verdrehbar bzw. gegen das Distanzhülsen-Unterteil "anschraubbar" ausgebildet. Sobald die zweiteilige Distanzhülse in den Grundkörper eingeschraubt worden ist, folgt eine leichte Relativerdrehung des Distanzhülsen-Oberteiles gegenüber dem Distanzhülsen-Unterteil, z.B. um 30°, wodurch die Schulter des ringmutterartigen Distanzhülsen-Oberteiles mit großer Kraft an den oberen Rand des Grundkörpers angepreßt und über diesen gegen das Distanzhülsen-Unterteil gekontert wird. Hierdurch wird eine zuverlässige Einzelzahnimplantatblockierung erreicht.

Nachstehend ist die Erfindung anhand von Ausführungsbeispielen unter Bezugnahme auf die schematische Zeichnung im einzelnen erläutert. Dabei zeigt:
- Fig. 1: ein erstes Ausführungsbeispiel eines Einzelzahnimplantates nach der Erfindung im Schnitt durch die Längsmittelachse;
- Fig. 2: die Distanzhülse nebst Implantatpfosten des Einzelimplantats von Fig. 1 in der Draufsicht, aus Richtung des aufzusetzenden Zahnersatzes gesehen;
- Fig. 3: einen Schnitt entlang der Linie III von Fig. 2;
- Fig. 4: ein weiteres Ausführungsbeipsiel des Einzelzahnimplantats nach der Erfindung in Fig. 1 entsprechender Darstellung; und
- Fig. 5: im Schnitt durch die Längsmittelachse ein Konterwerkzeug zur Verwendung bei einem Einzelzahnimplantat der in Fig. 4 gezeigten Art.

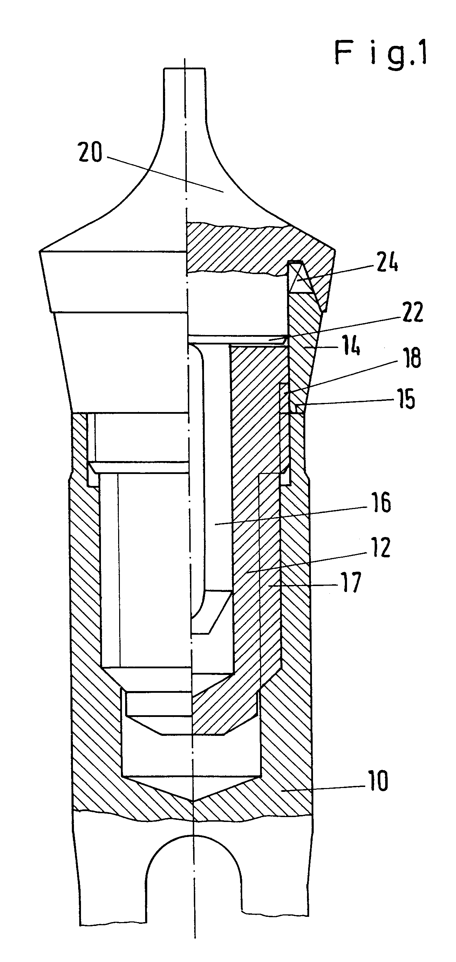

Wie Fig. 1 erkennen läßt, weist das Einzelzahnimplantat bei dem dort gezeigten Ausführungsbeispiel einen Grundkörper 10 bekannter Art auf, beispielsweise aus hydroxylapatidbeschichteten Titan bestehend, in den ein Distanzhülsen-Unterteil 12 eingeschraubt ist, auf welches wiederum ein Distanzhülsen-Oberteil 14 aufgeschraubt ist. Das Distanzhülsen-Oberteil 14 liegt am oberen Stirnrand des Grundkörpers 10 mit einer Schulter 15 an. Ein Implantatpfosten 16 ist in eine Innenbohrung des Distanzhülsen-Unterteils 12 eingesetzt. Das Distanzhülsen-Unterteil 12 ist in den Grundkörper 10 mittels eines Einsetzgewindes 17 eingeschraubt, dessen Steigung wesentlich steiler ist als die sehr flache Steigung eines Kontergewindes 18, welches zwischen dem Distanzhülsen-Unterteil 12 und dem Distanzhülsen-Oberteil 14 vorgesehen ist. Mit dem Implantatpfosten 16 ist ein Aufbaustift 20 für einen Zahnersatz starr verbunden.

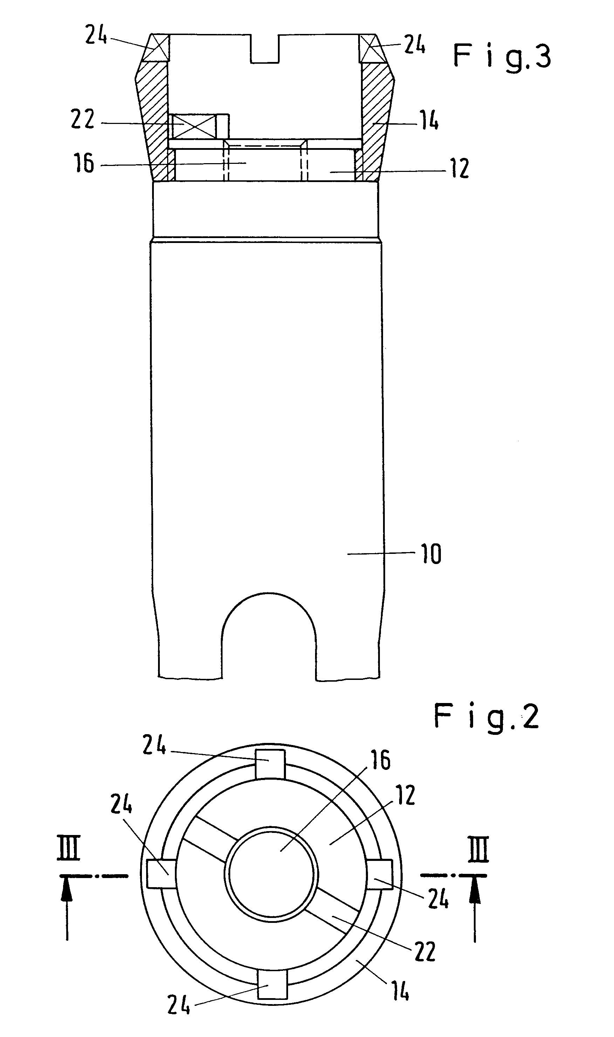

Fig. 1 läßt weiterhin erkennen, daß an der oberen Stirnfläche des Distanzhülsen-Unterteiles 12 ein diametrial verlaufender Ansetzsteg 22 zum Ansetzen eines Werkzeuges, wie weiter unten noch beschrieben, vorgesehen ist, während an der dem Zahnersatz 20 zugewandten Stirnfläche des Distanzhülsen-Oberteiles 14 Ansetznuten 24 für denselben Zweck vorgesehen sind. Fig. 2 zeigt diesbezüglich, daß vier um 90° winkelmäßig gegeneinander versetzte Ansetznuten 24 insgesamt eine Werkzeug-Ansetzeinrichtung bilden. Fig. 3 dient der weiteren Erläuterung des vorstehend diskutierten Sachverhaltes.

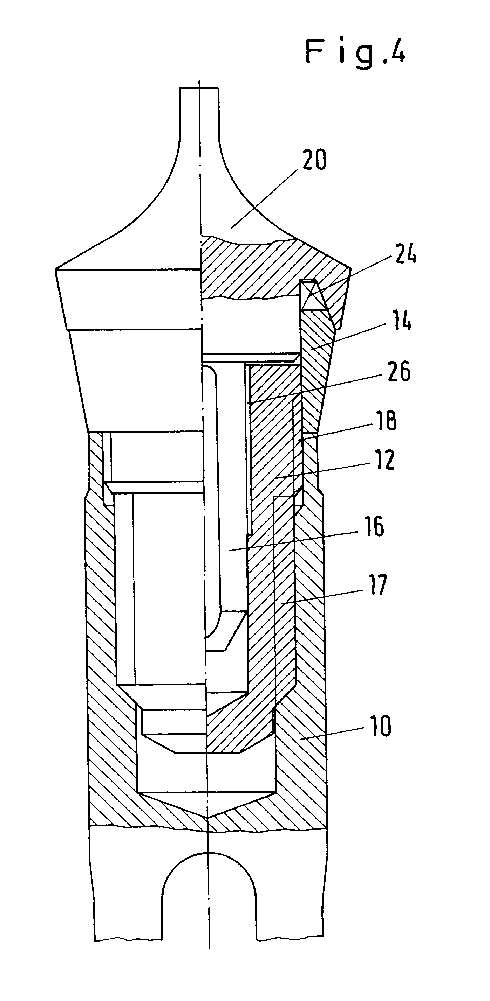

Das Ausführungsbeispiel von Fig. 4 unterscheidet sich von demjenigen gemäß Fig. 1 - 3 lediglich dadurch, daß hier im oberen Bereich der Innenbohrung des Distanzhülsen-Unterteils 12 ein Zentriergewinde 26 vorgesehen ist, auf dessen Zweck weiter unten noch eingegangen wird.

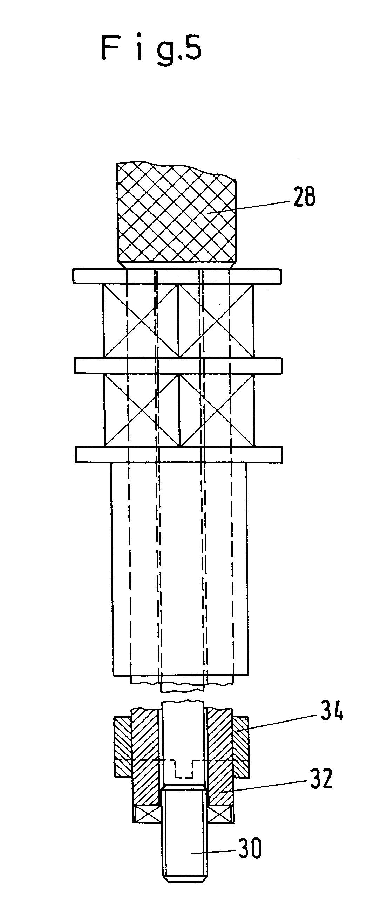

Fig. 5 läßt erkennen, daß das Konterwerkzeug nach der Erfindung bei dem dort gezeigten Ausführungsbeispiel einen Rändelkopf 28 aufweist, der fest mit einer Zentrierschraube 30 verbunden ist, die bei Benutzung des Werkzeuges zum Einschrauben in das Zentriergewinde 26 der Innenbohrung des Distanzhülsen-Unterteiles 12 bestimmt ist. Ein Unterteilschlüssel 32 ist zu dem Ansetzsteg 22 des Distanzhülsen-Unterteiles 12 komplementär, während ein Oberteilschlüssel 34 zu den Ansetznuten 24 des Distanzhülsen-Oberteils 14 komplementär ist.

Bei der Erfindung bzw. bei der Durchführung der Einzelzahnimplantatblockierung wird wie folgt vorgegangen:
Zunächst wird das aus dem Distanzhülsen-Unterteil 12 und dem Distanzhülsen-Oberteil 14 zusammengeschraubte Insert - beide Einzelteile bestehen aus Titan - in herkömmlicher Weise in den Grundkörper 10 eingeschraubt. Sobald die Schulter 15 an den oberen Rand des Grundkörpers 10 zur Anlage gekommen ist, erfolgt die Implantatblockierung, also die Drehsicherung, in folgender Weise: Mittels der Zentrierschraube 30 wird das Konterwerkzeug in das Zentriergewinde 26 eingeschraubt, und zwar soweit, bis der Unterteilschlüssel 32 mit dem Ansetzsteg 22 und der Oberteilschlüssel 34 mit den Ansetznuten 24 in Eingriff gekommen ist. Mittels vorzugsweise senkrecht zur Verdrehachse der beiden Schlüssel angeordneter kleiner Hebel wird einerseits das Distanzhülsen-Unterteil 12 gegen Drehung gesichert, andererseits aber das Distanzhülsen-Oberteil 14 leicht, z.b. um 30° oder um eine halbe Umdrehung, gegenüber dem Distanzhülsen-Unterteil verdreht. Hierdurch wird nach Art eines Differentialgewindes eine Konterung des Distanzhülsen-Oberteiles 14 gegenüber dem Distanzhülsen-Unterteil 12 über den Grundkörper, gegen den das Distanzhülsen-Oberteil 14 ja mit seiner Schulter 15 anliegt, bewerkstelligt.

Die Ausbildung der Werkzeug-Ansetzeinrichtung am Distanzhülsen-Unterteil 12 als Ansetzsteg 22 hat im übrigen den Vorteil, daß bei einem etwaigen Abbrechen des Implantatpfostens 16 an dieser Stelle, der im übrigen nach der vorstehend beschriebenen Blockierung in die Distanzhülse eingesetzt, z.B. eingeschraubt, wird, ein "Untergreifen" unter den Werkzeug-Ansetzsteg 22 möglich ist; auf diese Weise läßt sich die Distanzhülse dann noch aus dem Grundkörper 10 herausschrauben, auch nach einem Bruch des Implantatpfostens 16, wodurch das Einzelzahnimplantat gleichsam repariert werden kann, ohne daß der Grundkörper 10 aus dem Kiefer entnommen werden müßte. 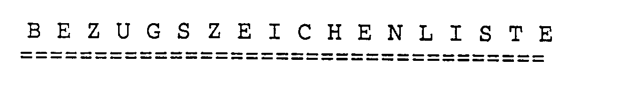
- 1.:
- 2.:
- 3.:
- 4.:
- 5.:
- 6.:
- 7.:
- 8.:
- 9.:
- 10.: Grundkörper
- 11.:
- 12.: Distanzhülsen-Unterteil
- 13.:
- 14.: Distanzhülsen-Oberteil
- 15.: Schulter
- 16.: Implantatpfosten
- 17.: Einsetzgewinde
- 18.: Kontergewinde
- 19.:
- 20.: Aufbaustift für Zahnersatz
- 21.:
- 22.: Ansetzsteg
- 23.:
- 24.: Ansetznuten
- 25.:
- 26.: Zentriergewinde
- 27.:
- 28.: Rändelkopf
- 29.:
- 30.: Zentrierschraube
- 31.:
- 32.: Unterteilschlüssel
- 33.:
- 34.: Oberteilschlüssel

## Patentansprüche

1. Enossales Einzelzahnimplantat mit einen Befestigungskopf und einen mit einem Grundkörper (10) verschraubbaren Implantatpfosten (16) aus Metall aufweisenden Befestigungseinrichtungen für einen festsitzenden, bedingt abnehmbaren Zahnersatz, mit einer mit einem Zentrierbund versehenen, in das offene Ende des Grundkörpers einschraubbaren und mit einer Schulter (15) an den oberen Rand des Grundkörpers anlegbaren Distanzhülse (12, 14) aus Metall, in die der Implantatpfosten einschraubbar ist, **dadurch gekennzeichnet,** daß die Distanzhülse ein mit einem Außen-Einsetzgewinde (17) in den Grundkörper (10) einschraubbares Distanzhülsen-Unterteil (12) und ein mit der Schulter (15) zum Anlegen an den oberen Rand des Grundkörpers (10) versehenes ringmutterartiges Distanzhülsen-Oberteil (14) aufweist, welche mittels eines Innen-Kontergewindes (18) mit wesentlich geringerer Steigung als das Einsetzgewinde (17) auf ein nahe dem oberen Rand des Distanzhülsen-Unterteils (12) an diesem vorgesehenes entsprechendes Außengewinde aufschraubbar ist; und daß an der oberen Stirnfläche des Distanzhülsen-Unterteils (12) und des Distanzhülsen-Oberteils (14) Werkzeug-Ansetzeinrichtungen (22, 24) zum gleichzeitigen Sichern des Distanzhülsen-Unterteils (12) gegen Verdrehen nach dem Einschrauben in den Grundkörper (10) und Verdrehen des Distanzhülsen-Oberteils (14) relativ zum Distanzhülsen-Unterteil (12) unter Anpressen der Schulter (15) an den oberen Rand des Grundkörpers (10) vorgesehen sind.

2. Einzelzahnimplantat nach Anspruch 1, **dadurch gekennzeichnet,** daß die an der Stirnfläche des Distanzhülsen-Unterteils (12) vorgesehene Werkzeug-Ansetzeinrichtung einen diametral verlaufenden Ansetzsteg (22) aufweist.

3. Einzelzahnimplantat nach Anspruch 1 oder 2, **dadurch gekennzeichnet,** daß die an der Stirnfläche des Distanzhülsen-Oberteils (14) vorgesehene Werkzeug-Ansetzeinrichtung mindestens zwei diametrial einander gegenüberliegende Ansetznuten (24) aufweist.

4. Einzelzahnimplantat nach einem der vorangehenden Ansprüche, **dadurch gekennzeichnet,** daß die zur Aufnahme des Implantatpfostens (16) bestimmte Innenbohrung des Distanzhülsen-Unterteils (12) nahe dessen oberen Rand ein Zentriergewinde (26) zum Ansetzen eines Konterwerkzeuges aufweist.

5. Konterwerkzeug zur Verwendung bei einem Einzelzahnimplantat nach einem der vorangehenden Ansprüche, **gekennzeichnet** durch einen zu der an der Stirnfläche des Distanzhülsen-Unterteils (12) vorgesehenen Werkzeug-Ansetzeinrichtung (22) komplementären Unterteilschlüssel (32) und einen zu der an der Stirnfläche des Distanzhülsen-Oberteils (14) vorgesehenen Werkzeug-Ansetzeinrichtung (24) komplementären, relativ gegenüber dem Unterteilschlüssel (32) verdrehbaren Oberteilschlüssel (34).

6. Konterwerkzeug zur Verwendung bei einem Einzelzahnimplantat nach Anspruch 4, **gekennzeichnet** durch eine den Unterteilschlüssel, (32) und den Oberteilschlüssel (34) konzentrisch durchsetzende Zentrierschraube (30) zum Einsetzen in das Zentriergewinde (26) des Distanzhülsen-Unterteiles (12).

7. Konterwerkzeug nach Anspruch 6, dadurch gekennzeichnet, daß die Zentrierschraube (30) mittels eines Rändelkopfes (28) betätigbar ist.

8. Konterwerkzeug nach einem der Ansprüche 5 - 7, **dadurch gekennzeichnet,** daß der Unterteilschlüssel (32) und der Oberteilschlüssel (34) mit im wesentlichen senkrecht zur Achse ihrer relativen Verdrehung verlaufenden Befestigungshebeln versehen sind.

## Claims

1. An endosseous single tooth implant comprising a securing head, a post (16) for screwing to a base member (10), and metal devices for securing a stationary, optionally removable dental prosthesis and comprising a metal spacer sleeve (12, 14) which has a centring collar and can be screwed into the open end of the base member, and has a shoulder (15) for placing on the top edge of the base member, the post being screwable into the spacer sleeve, characterised in that the spacer sleeve has a bottom part (12) having an external thread (17) for screwing into the base member (10) and a ring nut-like top part (14) which, via the shoulder (15), can be placed on the top edge of the base member (10), the top part (14) having an inner lock thread (18) having a substantially smaller pitch than the insertion thread (17) and screwable on to a corresponding outer thread formed on and near the top edge of the bottom part (12), and tool attachment means (22, 24) are provided on the top end face of the bottom part (12) and the top part (14) for simultaneously securing the bottom part (12) against twisting after being screwed into the base member (10) and for preventing the top part (14) from twisting relative to the bottom part (12) by pressing the shoulder (15) against the top edge of the base member (10).

2. A single tooth implant according to claim 1, characterised in that the tool attachment device provided on the end face of the bottom part (12) has a diametrically extending web (22).

3. A single tooth implant according to claim 1 or 2, characterised in that the tool attachment means provided on the end face of the top part (14) has at least two diametrically opposite grooves (24).

4. A single tooth implant according to any of the preceding claims, characterised in that the inner bore of the bottom part (12) for receiving the post (16) is formed near its top edge with a centring thread (26) for attaching a tool.

5. A tool for use on an individual tooth implant according to any of the preceding claims, characterised by a bottom-part key (32) complementary with the tool attachment means (22) provided on the end face of the bottom part (12) and a top-part key (34) rotatable relative to the bottom-part key (32) and complementary relative to the tool attachment means (24) provided on the end face of the top part (14).

6. A tool for use on an individual tooth implant according to claim 4, characterised by a centring screw (30) which extends concentrically through the bottom-part key (32) and the top-part key (34) for insertion in the centring thread (26) of the bottom part (12).

7. A tool according to claim 6, characterised in that the centring screw (30) can be actuated by means of a milled head (28).

8. A tool according to any of claims 5 to 7, characterised in that the bottom-part key (32) and the top-part key (34) have securing levers extending substantially at right angles to the axis of their relative rotation.

## Revendications

1. Implant endo-osseux pour une seule dent avec une tête de fixation et des dispositifs de fixation présentant un pilier d'implant (16) en métal pouvant être vissé avec un corps de base (10) pour une prothèse dentaire fixe, mais cependant amovible dans certaines conditions, avec une douille d'écartement (12, 14) pourvue d'un collet de centrage, pouvant être vissée dans l'extrémité ouverte du corps de base et reposant par un épaulement (15) sur le bord supérieur du corps de base, dans laquelle le pilier d'implant peut être vissé, caractérisé en ce que la douille d'écartement présente une partie inférieure de douille d'écartement (12) pouvant être vissée dans le corps de base (10) avec un filet d'insertion (17) extérieur et une partie supérieure de douille d'écartement (14) en forme d'écrou à anneau pourvue de l'épaulement (15) destiné à reposer sur le bord supérieur du corps de base (10), laquelle peut être vissée au moyen d'un filet de blocage (18) intérieur d'un pas sensiblement inférieur à celui du filet d'insertion (17) sur un filet extérieur correspondant prévu à proximité du bord supérieur de la partie inférieure de douille d'écartement (12) sur celle-ci, et en ce que des dispositifs de mise en place d'outil (22, 24) sont prévus sur la face supérieure de la partie inférieure de douille d'écartement (12) et de la partie supérieure de douille d'écartement (14) pour le maintien simultané de la douille d'écartement contre la rotation après le vissage dans le corps de base (10) et la rotation de la partie supérieure de douille d'écartement (14) par rapport à la partie inférieure de douille d'écartement (12), l'épaulement (15) appuyant sur le bord supérieur du corps de base (10).

2. Implant pour une seule dent selon la revendication 1, caractérisé en ce que le dispositif de mise en place d'outil prévu sur la face avant de la partie inférieure de douille d'écartement (12) présente une nervure de mise en place (22) s'étendant dans le sens diamétral.

3. Implant pour une seule dent selon la revendication 1 ou 2, caractérisé en ce que le dispositif de mise en place d'outil prévu sur la face de la partie supérieure de douille d'écartement (14) présente au moins deux rainures de mise en place (24) diamétralement opposées.

4. Implant pour une seule dent selon l'une des revendications précédentes, caractérisé en ce que le trou intérieur de la partie inférieure de douille d'écartement (12) prévu pour recevoir le pilier d'implant (16) présente près de son bord supérieur un filet de centrage (26) pour la mise en place d'un outil de blocage.

5. Outil de blocage destiné à être utilisé pour un implant pour une seule dent selon l'une des revendications précédentes, caractérisé en ce qu'il comporte une clé pour la partie inférieure (32) complémentaire du dispositif de mise en place d'outil (22) prévu sur la face de la partie inférieure de douille d'écartement (12) et une clé pour la partie supérieure (34) complémentaire du dispositif de mise en place d'outil (24) prévu sur la face de la partie supérieure de douille d'écartement (14), pouvant effectuer une rotation par rapport à la clé pour la partie inférieure (32).

6. Outil de blocage destiné à être utilisé pour un implant pour une seule dent selon la revendication 4, caractérisé en ce qu'il comporte une vis de centrage (30) traversant de manière concentrique la clé pour la partie inférieure (32) et la clé pour la partie supérieure (34) en vue de l'insertion dans le filet de centrage (26) de la partie inférieure de douille d'écartement (12).

7. Outil de blocage selon la revendication 6, caractérisé en ce que la vis de centrage (30) peut être actionnée au moyen d'une tête de molette (28).

8. Outil de blocage selon l'une des revendications 5 à 7, caractérisé en ce que la clé pour la partie inférieure (32) et la clé pour la partie supérieure (34) sont pourvues de leviers de fixation sensiblement perpendiculaires à l'axe de leur rotation relative.
